# FASCICULE DE BREVET EUROPEEN

(11) **EP 2 605 643 B1**
(45) Date de publication et mention de la délivrance du brevet: **14.05.2014**
(21) Numéro de dépôt: 11755385.9
(22) Date de dépôt: 29.07.2011
(51) Int. Cl.: A01M 7/00

(54) **DISPOSITIF ET PROCÉDÉ POUR DISTRIBUER UN PRODUIT LIQUIDE À PROJETER SUR UNE SURFACE**
VORRICHTUNG UND VERFAHREN ZUR AUSGABE EINES FLÜSSIGPRODUKTS ZUM SPRÜHEN AUF EINE OBERFLÄCHE
DEVICE AND METHOD FOR DISPENSING A LIQUID PRODUCT THAT IS TO BE SPRAYED ONTO A SURFACE

(30) Priorité: 10.09.2010 FR 1057215; 18.08.2010 FR 1056644
(43) Date de publication de la demande: 26.06.2013
(73) Titulaire: EXEL INDUSTRIES, 51200 Epernay (FR)
(72) Inventeur: BALLU, Patrick Jean Marie, F-51100 Reims (FR)
(74) Mandataire: Chevalier, Renaud Philippe
(86) Numéro de dépôt international: PCT/FR2011/051842
(87) Numéro de publication internationale: WO 2012/022903

(56) Documents cités:
- JP-A- 9 313 085
- US-A- 5 971 294

## Description

La présente invention concerne un dispositif et un procédé pour distribuer un produit liquide à projeter sur une surface telle qu'un terrain agricole.

La présente invention trouve application dans le domaine agricole pour pulvériser sur un champ un produit phytosanitaire liquide tel qu'un engrais ou un biocide du type herbicide, insecticide fongicide etc.

Un dispositif de distribution de l'art antérieur, voir par exemple le document JP-A-09313085, comprend une rampe conventionnelle, laquelle comporte plusieurs canalisations consécutives, chacune formant un tronçon longitudinal de la rampe et présentant une entrée d'alimentation et des sorties connectées à des buses adaptées pour pulvériser le produit liquide sur une cible, en général le sol ou des plantes, distantes d'environ 70 cm. La rampe est alimentée en produit liquide par une pompe qui aspire dans une source du produit liquide et qui refoule dans plusieurs conduites d'alimentation connectées respectivement aux entrées des canalisations. Généralement, la pompe est couplée à une vanne de by-pass de façon à porter, en amont des conduites d'alimentation, le produit liquide à une pression proportionnelle au carré de la vitesse d'avance de la rampe sur le terrain agricole, ce qui assure un débit global de produit liquide projeté constant par unité de surface traitée.

Une rampe conventionnelle peut mesurer jusqu'à 24 m, voire 48 m, de long. Sur un terrain agricole plan, la rampe est globalement horizontale et toutes les buses sont situées à une même hauteur par rapport au sol. Mais de nombreux terrains agricoles ont une topographie non plane, avec des reliefs tels qu'une pente ou dévers, une crête, un talweg etc. Donc, une rampe conventionnelle comporte généralement des moyens pour ajuster la hauteur des canalisations à la topographie du terrain agricole, de sorte que leurs sorties et les buses associées sont situées à des hauteurs différentes les unes des autres.

Cependant, les différences altimétriques entre les buses génèrent des différences de pression qui sont fonction de la hauteur de la colonne de liquide qui les séparent et de la densité de ce liquide. Le débit d'une buse étant proportionnel à la racine carrée de la pression, le débit en produit liquide diffère sur chaque buse, de sorte que le produit liquide n'est pas projeté uniformément sur chaque unité de surface.

Par exemple, dans le cas d'une rampe rectiligne conventionnelle de 36 m de long qui avance sur un dévers de 11 % pour projeter un engrais liquide de densité 1,32 sous une pression moyenne de 1,5 bar, la buse située à l'extrémité basse de la rampe débite 18% d'engrais liquide de plus que la buse située à l'extrémité haute de la rampe, car la différence de hauteur de 3,9 m induit une différence entre les pressions hydrostatiques au niveau de ces buses, qui sont respectivement de 1,76 bar et de 1,24 bar. Une telle différence de débit provoque une forte irrégularité (18% dans cet exemple) de traitement du terrain agricole entre deux passages successifs mitoyens, donc des écarts de croissance entre végétaux voisins de moins de 1 m. En outre, certaines normes imposent un écart maximal de 10% entre les volumes de produit liquide projetés sur deux unités de surface au cours d'une même pulvérisation. Les agriculteurs requièrent souvent de limiter à 5% seulement cet écart.

Un objet de la présente invention est de résoudre, en tout ou partie, les problèmes mentionnés ci-avant.

A cet effet, l'invention a pour objet un dispositif, selon la revendication 1, pour distribuer un produit liquide à projeter sur une surface telle qu'un terrain agricole, le dispositif comprenant une rampe pour pulvériser le produit liquide, la rampe comportant plusieurs canalisations consécutives, chaque canalisation formant un tronçon longitudinal de la rampe et présentant :
- au moins un orifice d'entrée destiné à être en communication de fluide avec au moins une source du produit liquide ; et
- au moins un orifice de sortie adapté pour être en communication de fluide avec au moins une buse.

Le dispositif se caractérise en ce qu'il comprend en outre :
- des capteurs liés à des canalisations respectives, chaque capteur étant adapté pour mesurer une grandeur permettant de déterminer une différence de pression entre deux canalisations respectives ou une grandeur permettant de déterminer une pression régnant dans une canalisation respective ;
- plusieurs organes conçus pour faire varier les pressions régnant dans des canalisations respectives, chaque organe étant en communication de fluide avec au moins un desdits orifices d'entrée ; et
- au moins une unité de commande reliée aux capteurs de façon à évaluer les différences de pressions entre au moins deux canalisations, l'unité de commande étant reliée aux organes de façon à les piloter pour réduire lesdites différences de pressions ou égaliser lesdites pressions.

En d'autres termes, dans un dispositif conforme à l'invention, les organes génèrent des pertes de charge qui compensent les différences de pressions entre buses telles qu'évaluées par une unité de commande recevant des mesures effectuées par les capteurs liés à des canalisations respectives. Les grandeurs mesurées permettent à l'unité de commande de déterminer une différence de pression entre deux canalisations respectives ; une telle grandeur peut par exemple être l'angle que la rampe ou ses bras forment avec l'horizontale. Alternativement, les grandeurs mesurées permettent à l'unité de commande de déterminer une pression régnant dans une canalisation respective ; une telle grandeur peut par exemple être la pression hydrostatique régnant dans cette canalisation.

Ainsi, un dispositif conforme à l'invention permet de limiter les différences de pression, donc les différences de débit, de produit liquide entre les buses d'une rampe, donc les différences de volume de produit liquide projeté par ces buses sur des unités de surfaces d'un même terrain agricole.

Selon un mode de réalisation, l'unité de commande est conçue pour piloter les organes de façon à limiter à moins de 10%, et de préférence à moins de 5%, lesdites différences de pressions.

Ainsi, dans la mesure où le débit en sortie d'une buse est proportionnel à la racine carrée de la pression du produit liquide, une telle unité de commande limite les différences de débit à moins de 5%, et de préférence à moins de 2,5%.

Selon un mode de réalisation, les capteurs comprennent des capteurs de pression, de préférence rapportés sur des canalisations respectives.

Ainsi, de tels capteurs de pression fournissent directement une mesure des pressions régnant dans les canalisations respectives, ce qui réduit le nombre de calculs que doit opérer l'unité de commande. L'unité de commande dispose donc des différences de pressions entre buses. Rapporter les capteurs de pression sur des canalisations respectives permet de rénover des dispositifs et rampes existants.

Selon un mode de réalisation, les capteurs comprennent au moins un inclinomètre.

Ainsi, les différences de hauteurs peuvent être soit calculées, à partir des grandeurs mesurées par un ou plusieurs inclinomètre(s) et l'unité de commande peut en déduire les différences de pressions entre buses.

Selon un mode de réalisation, les organes comprennent des organes de restriction de débit du produit liquide, tels que des régulateurs à pointeaux, des vannes à boisseau, des vannes à glace ou des électrovannes proportionnelles, ou des pinceurs de tuyaux.

Ainsi, de tels organes de restriction de débit peuvent générer des pertes de charges compensant les différences de hauteur, en augmentant les pressions hydrostatiques au niveau des buses les plus hautes, ce qui égalise les débits entre buses.

Selon un mode de réalisation, au moins un organe de restriction de débit comporte deux disques juxtaposés de façon coaxiale, chaque disque étant percé d'un orifice dissymétrique par rapport à l'axe des disques, les disques étant mobiles en rotation autour de leur axe commun sous l'action d'un organe d'entraînement, par exemple un moteur électrique.

Ainsi, un tel organe de restriction de débit permet un ajustement précis et rapide du débit de produit liquide.

Selon un mode de réalisation, chaque canalisation est liée à un capteur et chaque orifice d'entrée est en communication de fluide avec un organe.

Ainsi, l'unité de commande dispose de mesures effectuées pour chaque canalisation. La compensation des différences de pressions est alors particulièrement précise.

Selon un mode de réalisation, la rampe comporte en outre des conduits de liaison agencés de sorte que deux canalisations successives sont reliées par un conduit de liaison respectif et de sorte que des conduits de liaison forment au moins une partie de rampe équipée de plusieurs canalisations connectées en série, la rampe comportant une seule ou plusieurs desdites parties de rampe montées en parallèle, et au moins un organe est disposé entre des canalisations connectées en série.

Ainsi, une telle rampe présente une structure peu encombrante et moins lourde, car elle nécessite moins de conduites. Les buses peuvent avantageusement être actionnées isolément ou en groupe, par des signaux électriques ou pneumatiques.

Selon un mode de réalisation, le dispositif comprend en outre deux conduites d'alimentation raccordées respectivement aux deux canalisations disposées à chaque extrémité de la rampe ou d'une partie de rampe, en ce que la rampe ou chaque partie de rampe comporte en outre deux organes ou deux vannes de coupure, chaque organe ou vanne de coupure étant agencé(e) pour autoriser sélectivement un écoulement de produit liquide dans une conduite d'alimentation respective ou pour générer une perte de charge déterminée.

Ainsi, il est possible d'alimenter la rampe ou chaque partie de rampe en produit liquide avec un débit relativement grand par son extrémité haute ou par son extrémité basse, ce qui facilite l'égalisation des pressions régnant respectivement dans chaque canalisation, donc d'égaliser les débits projetés par les buses.

Selon un mode de réalisation, le dispositif comprend en outre plusieurs conduites d'alimentation destinées à être connectées en parallèle à au moins une source du produit liquide, chaque conduite d'alimentation étant en communication de fluide avec au moins un organe respectif, l'organe étant de préférence raccordé dans la région amont d'une conduite d'alimentation respective.

Ainsi, l'unité de commande peut piloter un organe pour chaque conduite. La compensation des différences de pressions est alors particulièrement précise.

Selon un mode de réalisation, au moins deux conduites d'alimentation sont raccordées à un même organe.

Ainsi, cela limite le nombre d'organes nécessaires.

Selon un mode de réalisation, le dispositif comprend en outre au moins un actionneur qui est lié à la rampe et qui est adapté pour faire varier l'angle d'inclinaison de la rampe de façon à suivre la topographie de ladite surface, en particulier ses dévers.

Ainsi, la rampe d'un tel dispositif peut s'incliner dans son ensemble pour suivre un dévers par exemple. Un tel actionneur, par exemple un vérin, peut être entraîné par une force hydraulique ou pneumatique.

Selon un mode de réalisation, le dispositif comprend en outre :
- un cadre central ;
- plusieurs bras mobiles, chaque bras mobile supportant au moins une canalisation ;
- des moyens de liaison entre le cadre central et les bras mobiles, chaque moyen de liaison permettant un pivotement relatif d'un bras mobile par rapport au cadre central.

Ainsi, la rampe d'un tel dispositif est formée de plusieurs bras pivotant indépendamment pour suivre un talweg ou une crête par exemple. Dans ce cas, les buses de deux canalisations voisines peuvent présenter des variations de hauteurs significatives, tandis que le dispositif conforme à l'invention compense les différences de pressions induites.

Selon un mode de réalisation, le dispositif comprend en outre un circuit d'alimentation placé en amont des conduites d'alimentation, le circuit d'alimentation étant conçu pour débiter le produit liquide en proportion de la vitesse d'avance de la rampe sur la surface.

Ainsi, le volume total de produit liquide projeté par unité de surface demeure constant lorsque la rampe ralentit ou accélère.

Selon un mode de réalisation, l'un au moins de l'ensemble des capteurs et de l'ensemble des organes forme un réseau multiplexé et relié par un bus.

Ainsi, les signaux ou données sont transmis rapidement entre l'unité de commande, d'une part, et les capteurs et/ou les organes, d'autre part et au moyen d'un câblage simplifié comportant un faible nombre de fils conducteurs.

Selon un mode de réalisation, chaque capteur et chaque organe sont intégrés dans un seul et même composant, l'ensemble des composants étant reliés entre eux par un même câble formant réseau multiplexé et assurant l'alimentation électrique.

Selon un mode de réalisation, l'organe incorpore en outre des moyens pour couper l'arrivée de fluide dans la canalisation associée.

Par ailleurs, la présente invention a pour objet un procédé, selon la revendication 15, pour distribuer un produit liquide à projeter sur une surface telle qu'un terrain agricole, le dispositif comprenant une rampe pour pulvériser le produit liquide, la rampe comportant plusieurs canalisations consécutives, chaque canalisation formant un tronçon longitudinal de la rampe et présentant :
- au moins un orifice d'entrée destiné à être en communication de fluide avec au moins une source du produit liquide ; et
- au moins un orifice de sortie adapté pour être en communication de fluide avec au moins une buse.

Le procédé se caractérise en ce qu'il comprend les étapes :
- mesurer une grandeur permettant de déterminer une pression régnant dans une canalisation respective au moyen de plusieurs capteurs liés à des canalisations respectives ;
- évaluer les différences de pressions entre au moins deux canalisations au moyen d'une unité de commande, centralisée ou propre à chaque capteur, qui est reliée aux capteurs ;
- faire varier les pressions régnant dans des canalisations respectives au moyen d'organes qui sont respectivement en communication de fluide avec au moins un desdits orifices d'entrée et qui sont pilotés par l'unité de commande en fonction desdites différences de pressions.

Ainsi, un procédé conforme à l'invention permet de limiter les différences de pression de produit liquide entre les buses d'une rampe, donc les différences de volume de produit liquide projeté par ces buses sur des unités de surfaces d'un même terrain agricole.

Selon un mode de réalisation, un procédé conforme à l'invention comprend en outre les étapes :
- vérifier si une pression au niveau d'une canalisation est supérieure à un seuil prédéterminé, de préférence à 0,5 bar ;
- si ladite pression est supérieure au seuil prédéterminé, piloter normalement l'organe correspondant à ladite canalisation ; et
- si ladite pression est inférieure au seuil prédéterminé, maintenir l'organe correspondant à ladite canalisation dans son état antérieur et, de préférence, avec une section de passage maximale.

Ainsi, lorsque chaque buse est équipée d'un système antigouttes, avec une membrane montée sur un ressort, l'évaluation des différences de pressions entre les canalisations tient compte des contrepressions résiduelles générées par les systèmes antigouttes.

Selon un mode de réalisation, un procédé conforme à l'invention comprend en outre les étapes :
- mettre en oeuvre un dispositif tel que précédemment exposé avec des capteurs de pression ;
- associer le dispositif à une unité de régulation, de pression ou de débit, conçue pour moduler le débit total du produit liquide projeté en fonction de la vitesse d'avance du dispositif sur la surface ;
- calculer, régulièrement et au moyen de l'unité de commande, l'écart entre, d'une part, une valeur moyenne de la pression mesurée par les capteurs et, d'autre part, la pression induite par ladite unité de régulation ; et
- piloter chaque organe de façon à maintenir ledit écart sous une valeur prédéterminée.

Ainsi, on évite une montée en pression du dispositif par dérive ou « emballement » de l'unité de commande, car la régulation se fait en priorité par réduction de pression, puis par augmentation de pression si nécessaire.

Selon un mode de réalisation, on pilote chaque organe avec une vitesse d'ouverture supérieure à la vitesse de fermeture.

Ainsi, on évite une montée en pression du dispositif par dérive ou « emballement » de l'unité de commande, car la régulation de perte de charge par chacun des organes se fait en priorité par réduction de pression, puis par augmentation de pression seulement si nécessaire.

Selon un mode de réalisation, un procédé conforme à l'invention peut en outre comprendre l'étape : si la grandeur mesurée par un capteur établit qu'une pression régnant dans une canalisation-cible diffère anormalement et simultanément des pressions régnant dans deux canalisations adjacentes, générer, au moyen de l'unité de commande, un signal identifiant la canalisation-cible de façon à informer un opérateur qu'un colmatage a pu survenir dans ou près de la canalisation-cible, par exemple au niveau d'un filtre et/ou d'une buse. Comme exemple de différence anormale, les pressions dans les canalisations adjacentes peuvent être toutes deux supérieures ou au contraire toutes deux inférieures à la pression dans la canalisation-cible.

Ainsi, l'opérateur réalise plus rapidement et plus précisément la maintenance corrective. Cette différence de pressions peut être fixée à une valeur significative. Deux colmatages peuvent survenir : Si un filtre monté sur la canalisation est colmaté, alors la pression régnant dans la canalisation-cible diminue anormalement par rapport à celle de ses canalisations adjacentes. Inversement, si des buses se colmatent, la pression régnant dans la canalisation-cible augmente anormalement par rapport à celle de ses canalisations adjacentes. Dans les deux cas, un signal identifiant la canalisation-cible informe l'opérateur du colmatage. Ce procédé peut être mis en oeuvre aussi bien avec une rampe à canalisations en série qu'avec une rampe à canalisations en parallèle.

La présente invention sera bien comprise et ses avantages ressortiront aussi à la lumière de la description qui va suivre, qui est donnée uniquement à titre d'exemple non limitatif et qui est faite en référence aux dessins annexés, dans lesquels :
- la figure 1 est une représentation schématique, donc sans échelle, d'un dispositif conforme à un premier mode de réalisation de l'invention ;
- la figure 2 est une représentation analogue à la figure 1 d'un dispositif conforme à un deuxième mode de réalisation de l'invention ;
- la figure 3 est une vue en coupe d'une partie d'un organe de restriction de débit conçu pour équiper le dispositif de la figure 1 ou 2 ;
- la figure 4 est une représentation analogue à la figure 1 d'un dispositif conforme à un troisième mode de réalisation de l'invention ; et
- la figure 5 est une représentation analogue à la figure 1 d'un dispositif conforme à un quatrième mode de réalisation de l'invention.

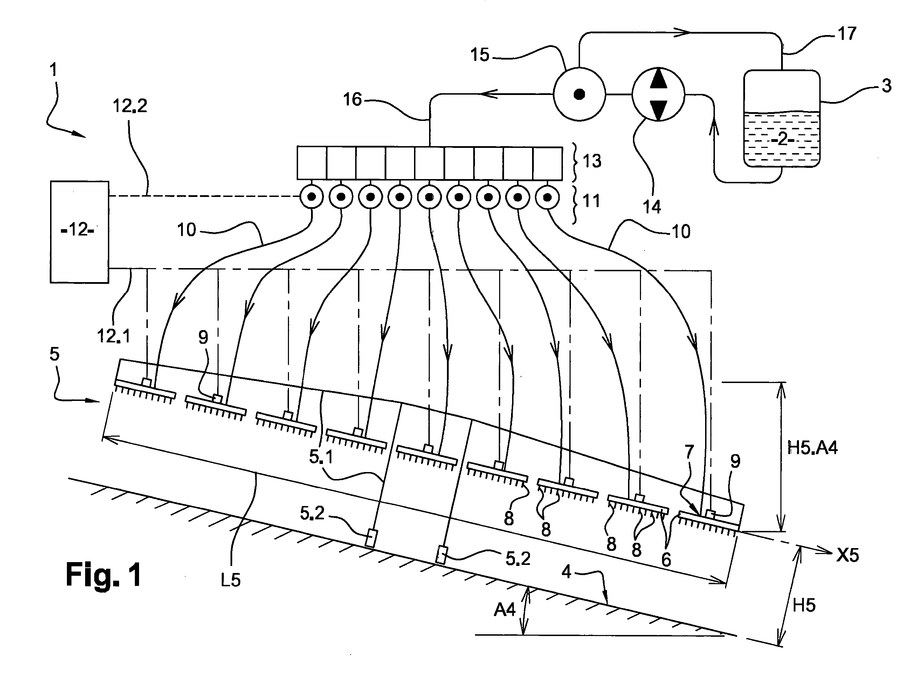

La figure 1 illustre un dispositif 1 pour distribuer un produit liquide 2, qui est contenu dans un réservoir 3 et qu'il faut projeter sur une surface 4 telle qu'un terrain agricole. Le dispositif 1 comprend une rampe 5 pour pulvériser le produit liquide 2. La rampe 5 est portée par un chassis 5.1 et des roues 5.2 pour rouler sur la surface 4. Les roues 5.2 passent dans des traces dépourvues de semis ou de plants. La rampe 5 peut avoir une longueur L5 d'environ 36 m, par exemple.

Dans la présente demande, l'expression « produit liquide » désigne tout produit comprenant une phase liquide. Le produit liquide 2 peut être de toute nature, par exemple un produit phytosanitaire tel qu'un engrais ou un biocide du type herbicide, insecticide, fongicide etc.

La rampe 5 comporte neuf canalisations, dont l'une est repérée à la figure 1 par la référence 6 et qui sont consécutives dans la direction longitudinale X5 de la longueur L5 de la rampe 5. Dans l'exemple de la figure 1, ces neuf canalisations sont colinéaires à la direction longitudinale X5. Les canalisations 6 et équivalentes sont supportées par le châssis 5.1. Dans la mesure où ces neuf canalisations sont semblables, la description de la canalisation 6 donnée ci-après en relation avec la figure 1 peut être transposée aux huit autres canalisations illustrées à la figure 1.

La canalisation 6 forme un tronçon longitudinal de la rampe 5. Les tronçons ont généralement une longueur de 3 m, 3,5 m ou 4 m, cette longueur étant définie par les semoirs. La canalisation 6 présente une entrée 7 et huit sorties. L'entrée 7 est formée par un orifice destiné à être en communication de fluide avec le réservoir 3, ainsi que décrit ci-après. Les huit sorties sont formées par huit orifices adaptés pour être en communication de fluide respectivement avec huit buses 8, lesquelles sont espacées typiquement de 50 cm suivant la direction longitudinale X5. Les buses 8 et équivalentes permettent de pulvériser le produit liquide sur la surface 4 qui forme une cible. La cible peut être le sol ou des plantes. La distance H5 des buses 8 à la surface 4, mesurée perpendiculairement à la direction longitudinale X5, est variable et elle est de préférence de 70 cm, plus généralement comprise entre 40 cm et 100 cm.

Dans l'exemple de la figure 1, la surface 4 présente un dévers d'environ 11 % qui est matérialisé par un angle A4 volontairement amplifié sur la figure 1. Le dispositif 1 comprend des actionneurs non représentés, qui sont en liaison avec la rampe 5 et qui sont adaptés pour faire varier l'angle d'inclinaison de la rampe 5 de façon à suivre la topographie de la surface 4, en particulier ses dévers. De tels actionneurs peuvent être formés par des vérins hydrauliques.

Dans la mesure où la rampe 5 a une longueur L5 d'environ 36 m, la rampe 5 présente une différence de hauteur H5.A4 de 3,6 m entre les buses situées aux extrémités latérales de la rampe 5.

Le dispositif 1 comprend en outre neuf capteurs de pression liés à des canalisations respectives. Sur la figure 1, la canalisation 6 est liée à un capteur de pression 9. Dans la mesure où ces neuf capteurs de pression sont semblables, la description du capteur de pression 9 donnée ci-après en relation avec la figure 1 peut être transposée aux huit autres capteurs de pression illustrés à la figure 1.

Le capteur de pression 9 forme un capteur adapté pour mesurer une grandeur permettant de déterminer une pression régnant dans la canalisation 6, à laquelle il est lié. Dans l'exemple de la figure 1, chaque capteur de pression 9 ou équivalent est formé par un manostat ou un pressostat. Chaque capteur de pression 9 ou équivalent est rapporté sur une canalisation 6 respective.

Le dispositif 1 comprend en outre des conduites d'alimentation 10, en aval desquelles sont raccordées les entrées 7 des canalisations 6 et équivalentes. Les conduites d'alimentation 10 ont pour fonction d'alimenter les canalisations 6 en produit liquide 2.

En amont de chaque conduite d'alimentation 10 est raccordée une vanne de coupure 13 qui autorise ou bloque l'écoulement de produit liquide dans la conduite d'alimentation 10 respective. Dans l'exemple de la figure 1, chaque vanne de coupure 13 est formée par une électrovanne ou autre vanne motorisée.

Une pompe 14 est implantée en aval du réservoir 3 de façon à mettre sous pression, donc en mouvement, le produit liquide 2. La pompe 14 a pour fonction de mettre en pression, donc en mouvement, le produit liquide 2 pour assurer son écoulement jusqu'aux buses 8.

Les conduites d'alimentation 10 sont destinées à être connectées en parallèle au réservoir 3, par l'intermédiaire de la pompe 14 et d'une vanne de coupure 13 respective.

Dans la présente demande, les verbes «raccorder», « connecter », « alimenter » et leurs dérivés se rapportent à la communication de fluide, c'est-à-dire à l'écoulement de liquide, entre deux éléments distants. De plus, les termes «amont» et « aval » font référence au sens d'écoulement du produit liquide dans un dispositif conforme à l'invention, depuis la source de produit liquide jusqu'aux sorties et aux buses.

De plus, le dispositif 1 comprend des organes 11 de restriction de débit du produit liquide 2. Les organes 11 sont conçus pour générer des pertes de charges différentes, afin de faire varier et d'égaliser les pressions régnant dans des canalisations 6 respectives.

Les organes de restriction de débit peuvent comprendre des régulateurs à pointeaux, des vannes à boisseau, des vannes à glace ou des électrovannes proportionnelles, ou encore des pinceurs de tuyaux.

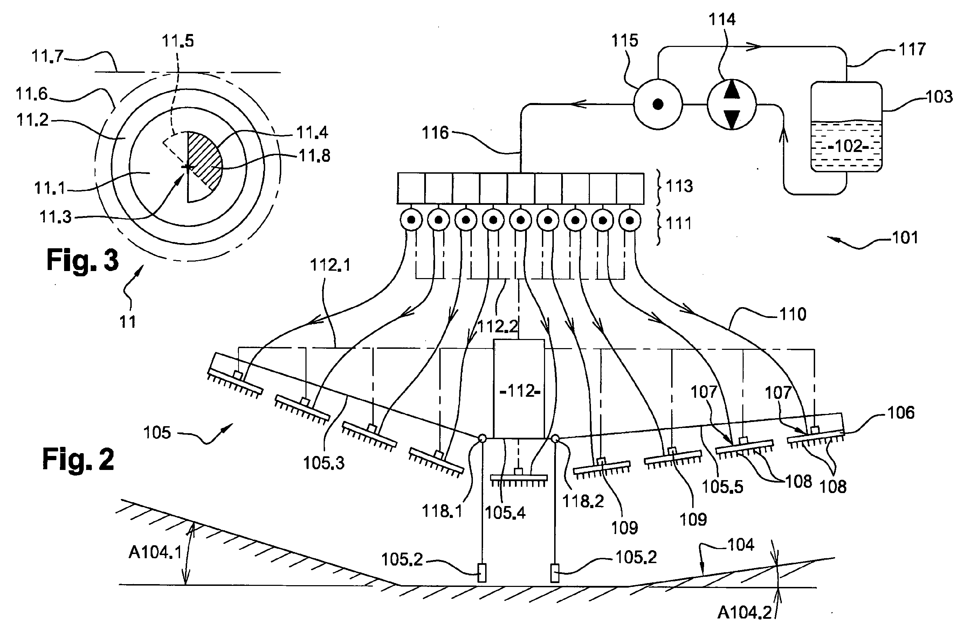

La structure d'un organe 11 spécifique est décrite ci-après en relation avec la figure 3.

Chaque organe 11 est raccordé en aval à une entrée 7 d'une canalisation 6, par l'intermédiaire d'une conduite 10, et en amont à une conduite commune 16, par l'intermédiaire d'une vanne de coupure 13.

Chaque organe 11 est raccordé dans la région amont d'une conduite d'alimentation 6 respective, en particulier à son extrémité amont dans l'exemple de la figure 1. Chaque organe 11 est en communication de fluide avec une entrée 7 par l'intermédiaire d'une conduite d'alimentation 10. En d'autres termes, chaque conduite d'alimentation 10 est en communication de fluide avec au moins un organe 11. Dans l'exemple de la figure 1, chaque canalisation 6 est liée à un capteur de pression 9 et chaque entrée 7 est en communication de fluide avec un organe 11.

Dans un mode de réalisation avantageux, l'organe 11 remplit lui-même la fonction de coupure d'alimentation de la canalisation 6, à la place de la vanne de coupure 13, en formant un composant unique. Dans ce mode de réalisation, chaque organe 11 est raccordé en amont directement à la conduite commune 16.

Le dispositif 1 comprend en outre une unité de commande 12 qui est reliée aux capteurs 9 de façon à évaluer les différences de pressions entre au moins deux canalisations 6. L'unité de commande 12 est aussi reliée aux organes 11 de façon à les piloter en fonction des ces différences de pressions que l'unité de commande 12 évalue. L'unité de commande 12 peut être embarquée sur la rampe 5 ou placée à distance de la rampe 5, par exemple embarquée sur un engin non représenté qui porte le chassis de la rampe 5.

L'unité de commande 12 est ici conçue pour piloter les organes 11 de façon à limiter à 10%, et de préférence à moins de 5%, ces différences de pressions.

Dans la présente demande, le verbe « relier » et ses dérivés se rapportent à la transmission de signaux de nature électrique, magnétique ou électromagnétique. Cette transmission de signaux peut être réalisée avec ou sans fil conducteur et au moyen d'un lien direct ou indirect, c'est-à-dire par l'intermédiaire d'aucun, d'un ou de plusieurs composant(s).

Sur la figure 1, la transmission de signaux entre les capteurs 9 et équivalents et l'unité de commande 12 est matérialisée par des traits pointillés 12.1 et la transmission de signaux entre l'unité de commande 12 et les organes 11 est matérialisée par des traits pointillés 12.2.

Dans l'exemple de la figure 1, l'ensemble des capteurs de pression 9 forme un réseau multiplexé et relié par un bus. De même, l'ensemble des organes 11 forme un réseau multiplexé et relié par un bus. La transmission de signaux suivant les traits 12.1 ou 12.2 est donc assurée au moyen de bus.

Un tel bus permet de limiter le nombre de fils électriques en général à seulement quatre, ce qui fait un réseau léger, économique et simple à installer et à maintenir.

Une vanne de by-pass 15, dite de régulation DPA, est connectée en aval de la pompe 14.. La vanne de by-pass 15 est connectée, d'une part, aux vannes de coupure 13 et/ou aux organes 11, au moyen de la conduite commune 16 et, d'autre part, au réservoir 3, ou directement en amont de la pompe 14, pour y reconduire une partie du produit liquide 2 au moyen d'une conduite de retour 17. La vanne de by-pass 15 a pour fonction de réguler le débit de produit liquide 2 proportionnellement à la vitesse d'avance de la rampe 5 sur la surface 4. Ainsi, l'ensemble du circuit d'alimentation placé en aval de la conduite commune 16 débite le produit liquide 2 en proportion de la vitesse d'avance de la rampe 5 sur la surface 4, c'est-à-dire en DPA.

En fonctionnement, un procédé conforme à l'invention pour distribuer le produit liquide 2 à projeter sur la surface 4, comprend une étape de mesure d'une grandeur permettant de déterminer une pression régnant dans une canalisation 6 respective au moyen de plusieurs capteurs de pression 9 liés aux canalisations 6 respectives. Dans le cas d'un capteur de pression 9, cette grandeur est directement la pression régnant dans la canalisation 6 respective.

Puis, dans le procédé conforme à l'invention, on évalue les différences de pressions entre deux canalisations 6 au moyen de l'unité de commande 12 qui est reliée aux capteurs de pression 9. Dans l'exemple de la figure 1, la différence de hauteur H5.A4 induit une différence de pression qui dépasse 0,5 bar entre les canalisations situées aux extrémités latérales, basse et haute, de la rampe 5.

Ensuite, l'unité de commande 12 pilote les organes 11 pour varier les pressions régnant dans les canalisations 6 respectives en fonction des différences de pressions préalablement évaluées, afin de rapprocher ces pressions de la moyenne de ces pressions (à l'exclusion des pressions inférieures au seuil déterminé). Les pressions sont mesurées de façon régulière de façon à minimiser progressivement toute différence de pression induite par les variations d'inclinaison de la rampe 5 qui avance sur la surface 4.

La pression moyenne générée par la pompe 14 est régulée dans la conduite commune 16 par la vanne de by-pass 15, afin d'assurer un Débit Proportionnel à l'Avancement (DPA), par exemple de 120 L/h de produit liquide 2. Le débit sur la totalité de la rampe 5 est réparti par les organes 11 dans les buses 8 de manière uniforme et indépendante de l'angle A4 que forme le dévers de la surface 4.

Ainsi, chaque buse 8 ou équivalent projette un même débit de produit liquide 2 par unité de la surface 4, par exemple 120 L/h, malgré les variations de la topographie de la surface 4.

Par ailleurs, suivant un procédé conforme à l'invention, l'unité de commande 12 peut mettre en oeuvre les étapes suivantes :
- vérifier si une différence de pression est supérieure à un seuil prédéterminé, par exemple de 0,5 bar, qui représente la contrepression résiduelle maximale générée par un système antigouttes équipant les buses ;
- si la différence de pression est supérieure au seuil prédéterminé, piloter les organes 11 ; et
- si la différence de pression est inférieure au seuil prédéterminé, maintenir les organes 11 dans leur état antérieur ; en variante, les organes peuvent être ouverts au maximum pour supprimer toute restriction, ce qui les prépare pour des opérations ultérieures.

Il est à noter que certains composants du dispositif 1, en particulier les capteurs de pression 9 et les organes 11, peuvent être rapportés sur une rampe existante pour la rénover. Avec une simple alimentation électrique, l'ensemble du dispositif peut être installé sur une rampe à rénover, indépendamment de tout système de pilotage ou de régulation électrique ou électronique déjà existant.

La figure 2 illustre un dispositif 101 conforme à un deuxième mode de réalisation de l'invention. Dans la mesure où le dispositif 101 est semblable au dispositif 1, la description du dispositif 1, donnée ci-avant en relation avec la figure 1, peut être transposée au dispositif 101, à l'exception des différences énoncées ci-après. Un élement du dispositif 101 semblable ou correspondant, par sa structure ou par sa fonction, à un élément du dispositif 1 porte ci-après la même référence numérique augmentée de 100.

On définit ainsi un produit liquide 102, un réservoir 103, une surface 104, une rampe 105 avec des roues 105.2, des canalisations 106, des entrées 107, des buses 108, des conduites d'alimentation 110, des organes 111, une unité de commande 112, des vannes de coupure 113, une pompe 114, une vanne de by-pass 115, une conduite commune 116 et une conduite de retour 117.

Le dispositif 101 diffère du dispositif 1, car le châssis de la rampe 105 est à géométrie variable, c'est-à-dire qu'il comprend un cadre central 105.4 et deux bras mobiles 105.3 et 105.5, ainsi que des moyens de liaison 118.1 et 118.2 entre le cadre central et les bras mobiles 105.3 et 105.5. Chaque moyen de liaison 118.1 et 118.2, qui est formé par exemple par un vérin hydraulique, permet un pivotement relatif entre le cadre central 105.4 et chaque bras mobiles 105.3 et 105.5. Dans l'exemple de la figure 2, le cadre central porte un tronçon et chaque bras mobile 105.3 et 105.5 supporte quatre canalisations 6 et équivalentes.

Ainsi, la rampe 105 peut suivre une topographie plus complexe de la surface 104, en permettant de maintenir une distance à la cible sensiblement constante, ce qui améliore l'uniformité de la projection du produit liquide 102 et évite, en cas de vent, l'envol des plus petites gouttelettes vers d'autres cultures.

Dans l'exemple de la figure 2, la surface 104 est formée par un talweg, dont la région centrale est sensiblement horizontale et dont les régions latérales forment des dévers respectifs A104.1 et A104.2 d'environ 11% et 5%.

De plus, le dispositif 101 diffère du dispositif 1, car l'unité de commande 112 est embarquée sur la rampe 5. L'unité de commande 112 est fixée sur le cadre central 105.4 de la rampe 5. Selon un mode de réalisation alternatif, le dispositif 1 pourrait aussi être construit avec l'unité de commande 12 embarquée sur le cadre central.

En outre, le dispositif 101 diffère du dispositif 1, car chaque capteur pour mesurer une grandeur permettant de déterminer une pression régnant dans une canalisation 106 respective est formé par un inclinomètre 109. Chaque inclinomètre 109 est lié à une canalisation 106 respective. En l'occurrence, chaque inclinomètre 109 est fixé sur un bras mobile respectif 105.3 et 105.5.

Dans la présente demande, le verbe « lier » et ses dérivés indiquent qu'un capteur est monté sur ou associé à au moins une canalisation. Ainsi, dans le dispositif 1, un capteur de pression 9 est en communication de fluide avec une canalisation 6, en l'occurrence directement piqué sur la canalisation 6. Dans le dispositif 101, l'inclinomètre 109 est simplement fixé ou monté sur une canalisation 106. Alternativement, l'inclinomètre 109 peut être monté sur un bras mobile, donc associé à une canalisation 106.

Chaque inclinomètre 109 mesure l'angle que forme un bras mobile respectif 105.3 et 105.5 sur l'horizontale, à cause des dévers A104.1 et A104.2. L'unité de commande 112 calcule la différence altimétrique entre deux canalisations 106, puis en calcule la différence de pression entre ces canalisations 106, à partir des dévers A104.1 et A104.2, de la densité du produit liquide 102, de la position de la canalisation 106 par rapport aux autres canalisations 106. L'unité de commande 112 peut ensuite piloter les organes 111 pour faire varier et égaliser les pressions régnant dans les différentes canalisations 106 respectives en fonction des différences de pressions préalablement évaluées.

La figure 3 illustre un organe 11 de restriction de débit qui est conçu pour équiper le dispositif 1 ou 101. L'organe 11 comporte deux disques 11.1 et 11.2 juxtaposés de façon coaxiale à un axe commun 11.3. Chaque disque 11.1 ou 11.2 est percé d'un orifice 11.4 ou 11.5 qui est dissymétrique par rapport à l'axe commun 11.3. Alternativement, chaque orifice peut avoir une forme autre que semi-circulaire, par exemple ovale, oblongue, en lumière allongée ou circulaire et excentrée.

Les disques 11.1 et 11.2 sont mobiles en rotation autour de leur axe commun 11.3. A cet effet, la périphérie du disque 11.2 est pourvue de dentures qui forment un engrenage 11.6 schématisé par un trait d'axe circulaire. L'engrenage 11.6 est conçu pour être entraîné par une vis sans fin 11.7 schématisée par son axe à la figure 3. La vis sans fin 11.7 forme un organe d'entraînement pour les disques 11.1 et 11.2.

Lorsque les disques 11.1 et 11.2 tournent l'un par rapport à l'autre, leurs orifices 11.4 et 11.5 se recouvrent plus ou moins de façon à définir une section débitante 11.8 variable en fonction du degré de rotation des disques 11.1 et 11.2. Ainsi, cet ensemble forme un organe 11 conçu pour faire varier et égaliser les pressions régnant dans des canalisations respectives.

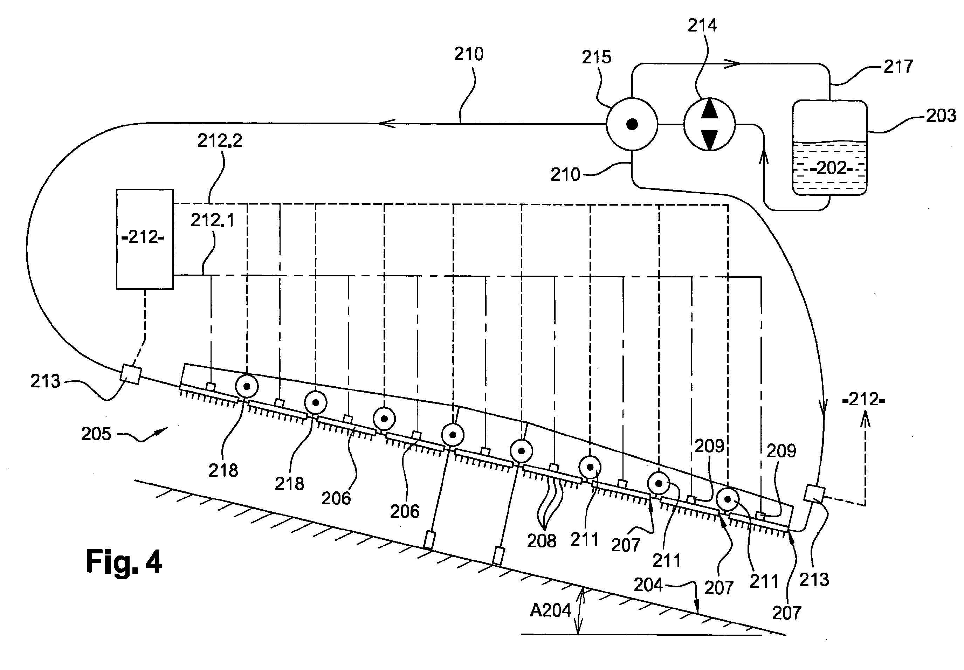

La figure 4 illustre un dispositif 201 conforme à un deuxième mode de réalisation de l'invention. Dans la mesure où le dispositif 201 est semblable au dispositif 1, la description du dispositif 1, donnée ci-avant en relation avec la figure 1, peut être transposée au dispositif 201, à l'exception des différences énoncées ci-après. Un élement du dispositif 201 semblable ou correspondant, par sa structure ou par sa fonction, à un élément du dispositif 1 porte ci-après la même référence numérique augmentée de 200.

On définit ainsi un produit liquide 202, un réservoir 203, une surface 204 avec un angle A204, une rampe 205, des canalisations 206, des entrées 207, des buses 208, des conduites d'alimentation 210, des organes 211, une unité de commande 212, des vannes de coupure 213, une pompe 214, une vanne de by-pass 215 et une conduite de retour 217.

Le dispositif 201 diffère du dispositif 1, car la rampe 205 comporte en outre des conduits de liaison 218, qui sont agencés de sorte que deux canalisations 206 successives sont reliées par un conduit de liaison respectif 218. En d'autres termes, les canalisations 206, qui forment chacune un tronçon longitudinal de la rampe 205, sont montées en série. Au contraire, les canalisations 6 et 106 illustrées respectivement aux figures 1 et 2 sont montées en parallèle.

Chaque organe 211 est disposé entre deux canalisations 206 successives. Pour faciliter la lecture de la figure 4, les organes 211 sont représentés au-dessus des conduits de liaison 218. Cependant, chaque organe 211 est avantageusement disposé directement sur la partie centrale d'un conduit de liaison respectif 218. Dans l'exemple de la figure 4, chaque organe 211 est formé par un restricteur de débit.

De plus, le dispositif 201 diffère du dispositif 1, car il comprend en outre deux conduites d'alimentation 210. Les conduites d'alimentation 210 sont raccordées respectivement aux deux canalisations 206 disposées à chaque extrémité de la rampe 205, c'est-à-dire respectivement sur la droite et sur la gauche de la figure 4.

En outre, la rampe 205 comporte deux vannes de coupure 213. Chaque vanne de coupure 213 est agencée pour autoriser sélectivement un écoulement de produit liquide 202 dans une conduite d'alimentation respective 210. Chaque vanne de coupure 213 est pilotée par l'unité de commande 212.

Par ailleurs, le dispositif 201 diffère du dispositif 1, car il est dépourvu de conduite commune en aval de la vanne de by-pass 215.

En fonctionnement selon un procédé conforme à l'invention, la surface 204 peut présenter un dévers qui est matérialisé sur la figure 4 par un angle A204. Dans le cas d'une rampe 205 sans articulation entre ses tronçons, les deux extémités de la rampe 205 se trouvent à des altitudes différentes. En d'autres termes, la rampe 205 présente une extrémité basse et une extrémité haute. Il s'établit une différence de pression entre l'extrémité basse et l'extrémité haute, et entre chaque canalisation 206.

Les capteurs de pression 209, qui sont liés à des canalisations respectives 206 déterminent la pression régnant dans chaque canalisation 206. Alternativement, un inclinomètre permet d'interpoler les différences de pressions régnant dans les canalisations 206.

Puis, l'unité de commande 212 évalue les différences de pressions entre deux canalisations 206. Ensuite, l'unité de commande 212 pilote les organes 211, de façon à varier les pressions régnant dans les canalisations 206 en fonction des différences de pressions préalablement évaluées. A cet effet, les organes 211 forment un réseau multiplexé et relié par un bus 212.1 et 212.2.

Pour un angle d'inclinaison A204 constant le long de la rampe 205, les organes 211 sont pilotés de façon à générer chacun une perte de charge suffisante pour équilibrer les pressions moyennes en amont, dans une canalisation 206 respective et en aval, dans une conduite 210 respective. Le pilotage des organes 211 est opéré à partir des mesures d'un inclinomètre ou d'un capteur de pression 209 respectif, en particulier ceux situés directement en amont et en aval, et suite aux calculs effectués par l'unité de commande 212 informée par les bus 212.1 et 212.2.

Ainsi, par exemple, dans le cas où les canalisations 206 sont identiques et où la rampe 205 est rectiligne et en dévers suivant un angle d'inclinaison A204, tous les organes 211 restreignent leurs sections de passage dans des proportions très semblables, afin de générer la même perte de charge, donc la même différence barométrique entre canalisations 206, induite par leurs différences d'altitudes semblables. Les pertes de charges générées successivement par chaque organe 211 se cumulent du haut vers le bas de la rampe 205, ce qui équilibre les pressions moyennes entre toutes les canalisations 206.

Lorsque les pressions dans chaque canalisation sont égalisées entre elles, chaque buse 208 ou équivalent projette un même débit de produit liquide 202 par unité de la surface 204, par exemple 120 L/h, malgré les variations de la topographie de la surface 204.

Avantageusement, la vanne de coupure 213 située à l'altitude la plus basse, celle de droite sur la figure 4, est fermée ou quasi-fermée. En revanche, la vanne de coupure 213 la plus haute, celle de gauche est complètement ouverte, ce qui facilite le pilotage des organes 211. Lorsque la surface est horizontale, les deux vannes de coupure sont réouvertes complètement.

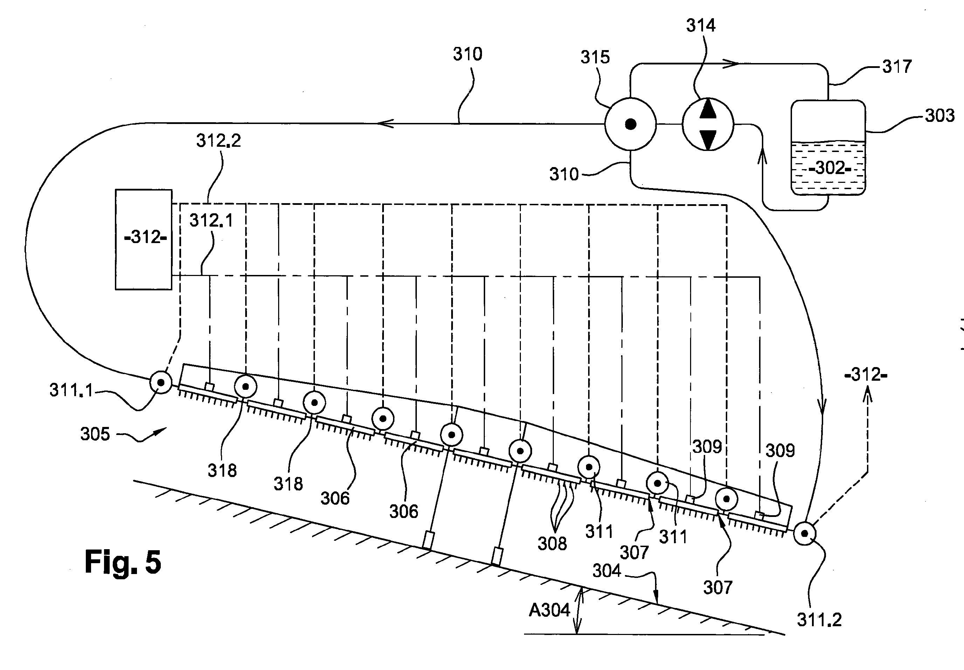

La figure 5 illustre un dispositif 301 conforme à un quatrième mode de réalisation de l'invention. Dans la mesure où le dispositif 301 est semblable au dispositif 201, la description du dispositif 201, donnée ci-avant en relation avec la figure 4, peut être transposée au dispositif 301, à l'exception des différences énoncées ci-après. Un élement du dispositif 301 semblable ou correspondant, par sa structure ou par sa fonction, à un élément du dispositif 201 porte ci-après la même référence numérique augmentée de 300.

On définit ainsi un produit liquide 302, un réservoir 303, une surface 304 avec un angle A304, une rampe 305, des canalisations 306, des entrées 307, des buses 308, des conduites d'alimentation 310, des organes 311, une unité de commande 312, une pompe 314, une vanne de by-pass 315 et une conduite de retour 317.

Le dispositif 301 diffère du dispositif 201, car la rampe 305 comporte des restricteurs 311.1 et 311.2 disposés à chaque extrémité de la rampe 305, au lieu des vannes de coupure 213. Chaque organe 311.1 ou 311.2 est piloté par l'unité de commande 312. Chaque organe 311.1 ou 311.2 est formé d'un restricteur de débit similaire aux organes 311.

L'organe 311.2, le plus bas, restreint fortement sa section de passage afin de générer une perte de charge compensant la totalité du dévers A304 de la rampe 305, ou d'une partie de rampe le cas échéant. Dans le cas où les canalisations ou tronçons 306 sont identiques, cette perte de charge vaut au minimum la somme des pertes de charge (identiques) qui sont générées par tous les autres organes 311 situés plus haut, plus une unité.

En d'autres termes, si la rampe 305 comporte N canalisations 306, donc (N-1) organes intermédiaires 311, situés entre les tronçons de la rampe 305, l'unité de commande 312 pilote l'organe 311.2, le plus bas, de sorte qu'il génère une perte de charge supérieure ou égale à N fois la perte de charge générée par l'ensemble des organes intermédiaires 311.

Lorsque la surface 304 est horizontale, les organes 311.1 et 311.2 sont réouverts au maximum, car la pression redevient quasiment la même dans toutes les canalisations 306, lesquelles peuvent être de nouveau alimentées avec les mêmes débits à chaque extrémité de la rampe 305, ou de chaque partie de rampe le cas échéant.

De plus, dans l'exemple de la figure 5, chaque organe 311 présente une vitesse d'ouverture supérieure à la vitesse de fermeture par exemple au moyen des signaux de pilotage. L'unité de commande pilote chaque organe 311 avec une vitesse d'ouverture supérieure à la vitesse de fermeture, afin que la régulation se fasse en priorité par réduction de pression, puis par augmentation de pression seulement si nécessaire.

Ainsi, on évite une montée en pression du dispositif par dérive ou « emballement » de l'unité de commande 312. En d'autres termes, pour obtenir l'équilibre des pressions dans toutes les canalisations 306, l'unité de commande essaie d'abord de diminuer la pression dans chacune d'entre elles, en réduisant la perte de charge générée par son organe 311, avant de cherche à l'augmenter. Ainsi, la pression moyenne dans les canalisations tend à s'approcher le plus possible de la pression d'alimentation dans les conduites 310.

Selon d'autres modes de réalisation de l'invention non représentés, pris isolément ou selon toute combinaison techniquement admissible :
- On réunit au même endroit (à l'entrée de chaque canalisation/tronçon), et préférentiellement dans un même organe intégré (pour réduire les coûts), l'ensemble des trois fonctions décrites ci-dessus : capteur de pression, restricteur de débit et carte électronique de pilotage (c'est-à-dire l'unité de commande devenue ainsi individuelle), et éventuellement une quatrième° : la coupure du tronçon. Cette intégration permet une réduction significative de coût. Tous ces organes intégrés sont reliés entre eux par un même cable, faisant réseau multiplexé Bus et assurant l'alimentation électrique. Avantageusement ces organes intégrés multifonctions sont disposés directement sur la rampe, ce qui les rend très facilement adaptables sur une rampe d'occasion.
- Les capteurs comprennent au moins un inclinomètre monté sur directement sur une canalisation respective, ou sur le cadre central ou sur au moins un des bras de la rampe. Dans le cas d'une rampe non articulée, qui présente donc un seul angle d'inclinaison par rapport au terrain agricole, un seul inclinomètre permet à l'unité de commande de déterminer par calcul la pression qui règne dans chaque canalisation.
- Au moins deux conduites d'alimentation de type 10 sont en communication de fluide avec un même organe de type 11, en amont de leur propre vanne de coupure individuelle, afin de varier simultanément les pressions régnant dans plusieurs canalisations, ce qui limite le nombre d'organes nécessaires.
- Le nombre de canalisations est compris entre 3 et 30, de préférence entre 5 et 25.
- Le nombre de bras à géométrie variable est compris entre 2 et 6, de préférence égal à 2.
- Les capteurs comprennent des capteurs adaptés pour déterminer la hauteur au sol de plusieurs canalisations respectives.
- L'unité de commande est conçue pour interpoler et/ou extrapoler les mesures de pression réalisées par des capteurs installés seulement au niveau de certaines canalisations sélectionnées. Dans une telle variante, il n'est pas nécessaire d'équiper toutes les canalisations d'un capteur.
- La rampe comporte plusieurs parties de rampe, par exemple deux, qui sont montées, donc alimentées, en parallèle, chaque partie de rampe comportant plusieurs canalisations connectées en série au moyen de conduits de liaison reliés chacun à deux canalisations.
- Si la grandeur mesurée par un capteur établit qu'une pression régnant dans une canalisation-cible diffère anormalement et simultanément des pressions régnant dans deux canalisations adjacentes (ces pressions étant par exemple toutes deux supérieures ou toutes deux inférieures), l'unité de commande génère un signal identifiant la canalisation-cible de façon à informer un opérateur qu'un colmatage a pu survenir dans ou près de la canalisation-cible, par exemple au niveau d'un filtre et/ou d'une buse rapporté(e) sur cette canalisation-cible.
- Un dispositif conforme à l'invention est associé à une unité de régulation dite D.P.A. (pour Débit Proportionnel à l'Avancement), qui régule en pression ou en débit pour moduler le débit total du produit liquide projeté en fonction de la vitesse d'avance du dispositif sur la surface. L'unité de commande calcule régulièrement l'écart entre, d'une part, une valeur moyenne de la pression mesurée par chaque capteur et, d'autre part, la pression induite par ladite unité de régulation. Puis, l'unité de commande pilote chaque organe de façon à maintenir ledit écart sous une valeur prédéterminée.

## Revendications

1. Dispositif (1 ; 101 ; 201 ; 301), pour distribuer un produit liquide (2 ; 102 ; 202 ; 302) à projeter sur une surface (4 ; 104 ; 204 ; 304) telle qu'un terrain agricole, le dispositif (1 ; 101 ; 201 ; 301) comprenant une rampe (5 ; 105 ; 205 ; 305) pour pulvériser le produit liquide (2 ; 102 ; 205 ; 305), la rampe (5 ; 105 ; 205 ; 305) comportant plusieurs canalisations (6 ; 106 ; 206 ; 306) consécutives, chaque canalisation (6 ; 106 ; 206 ; 306) formant un tronçon longitudinal de la rampe (5 ; 105 ; 205 ; 305) et présentant :
- au moins un orifice d'entrée (7 ; 107 ; 207 ; 307) destiné à être en communication de fluide avec au moins une source (3 ; 103 ; 203 ; 303) du produit liquide (2 ; 102 ; 202 ; 302) ; et
- au moins un orifice de sortie adapté pour être en communication de fluide avec au moins une buse (8 ; 108 ; 208 ; 308),
le dispositif (1 ; 101 ; 201) étant **caractérisé en ce qu'**il comprend en outre :
- des capteurs (9 ; 109 ; 209 ; 309) liés à des canalisations (6 ; 106 ; 206 ; 306) respectives, chaque capteur (9 ; 109 ; 209 ; 309) étant adapté pour mesurer une grandeur permettant de déterminer une différence de pression entre deux canalisations respectives ou une grandeur permettant de déterminer une pression régnant dans une canalisation (6 ; 106 ; 206 ; 306) respective ;
- plusieurs organes (11 ; 111 ; 211 ; 311, 311.1, 311.2) conçus pour faire varier les pressions régnant dans des canalisations (6 ; 106 ; 206 ; 306) respectives, chaque organe (11 ; 111 ; 211 ; 311, 311.1, 311.2) étant en communication de fluide avec au moins un desdits orifices d'entrée (7 ; 107 ; 207 ; 307) ; et
- au moins une unité de commande (12 ; 112 ; 212 ; 312) reliée aux capteurs (9 ; 109 ; 209 ; 309) de façon à évaluer les différences de pressions entre au moins deux canalisations (6 ; 106 ; 206 ; 306), l'unité de commande (12 ; 112 ; 212 ; 312) étant reliée aux organes (11 ; 111 ; 211 ; 311, 311.1, 311.2) de façon à les piloter pour réduire lesdites différences de pressions ou égaliser lesdites pressions.

2. Dispositif (1 ; 101 ; 201 ; 301) selon la revendication 1, dans lequel l'unité de commande (12 ; 112 ; 212 ; 312) est conçue pour piloter les organes (11 ; 111 ; 211 ; 311) de façon à limiter à moins de 10%, et de préférence à moins de 5%, lesdites différences de pressions.

3. Dispositif (1 ; 101 ; 201 ; 301) selon l'une des revendications précédentes, dans lequel les capteurs (9 ; 109 ; 209 ; 309) comprennent des capteurs de pression, de préférence rapportés sur des canalisations respectives (6 ; 106 ; 206 ; 306).

4. Dispositif (1 ; 101 ; 201 ; 301) selon l'une des revendications précédentes, dans lequel les capteurs (9 ; 109 ; 209 ; 309) comprennent au moins un inclinomètre.

5. Dispositif (1 ; 101 ; 201 ; 301) selon l'une des revendications précédentes, dans lequel les organes (11 ; 111 ; 211 ; 311) comprennent des organes de restriction de débit du produit liquide (2 ; 102 ; 202 ; 302), tels que des régulateurs à pointeaux, des vannes à boisseau, des vannes à glace ou des électrovannes proportionnelles, ou des pinceurs de tuyaux.

6. Dispositif (1) selon la revendication 5, dans lequel au moins un organe (11) de restriction de débit comporte deux disques (11.2, 11.3) juxtaposés de façon coaxiale, chaque disque (11.2, 11.3) étant percé d'un orifice (11.4, 11.5) dissymétrique par rapport à l'axe des disques (11.2, 11.3), les disques (11.2, 11.3) étant mobiles en rotation autour de leur axe commun (11.3) sous l'action d'un organe d'entraînement (11.7), par exemple un moteur électrique.

7. Dispositif (1 ; 101 ; 201 ; 301) selon l'une des revendications précédentes, dans lequel chaque canalisation (6 ; 106 ; 206 ; 306) est liée à un capteur (9 ; 109 ; 209 ; 309) et chaque orifice d'entrée (7 ; 107 ; 207 ; 307) est en communication de fluide avec un organe (11 ; 111 ; 211 ; 311).

8. Dispositif selon la revendication 7, **caractérisé en ce que** la rampe (205 ; 305) comporte en outre des conduits de liaison (218 ; 318) agencés de sorte que deux canalisations (206 ; 306) successives sont reliées par un conduit de liaison respectif (218 ; 318) et de sorte que des conduits de liaison (218 ; 318) forment au moins une partie de rampe équipée de plusieurs canalisations (206 ; 306) connectées en série, la rampe (205 ; 305) comportant une seule ou plusieurs desdites parties de rampe montées en parallèle, et **en ce que** au moins un organe (211 ; 311) est disposé entre des canalisations (206 ; 306) connectées en série.

9. Dispositif selon la revendication 8, **caractérisé en ce qu'**il comprend en outre deux conduites d'alimentation (210 ; 310) raccordées respectivement aux deux canalisations (206 ; 306) disposées à chaque extrémité de la rampe (205 ; 305) ou d'une partie de rampe, **en ce que** la rampe (205 ; 305) ou chaque partie de rampe comporte en outre deux organes (311.1, 311.2) ou deux vannes de coupure (213), chaque organe (311.1, 311.2) ou vanne de coupure (213) étant agencé(e) pour autoriser sélectivement un écoulement de produit liquide (202 ; 302) dans une conduite d'alimentation respective (210 ; 310) ou pour générer une perte de charge déterminée.

10. Dispositif (1 ; 101) selon l'une des revendications 1 à 7, comprenant en outre plusieurs conduites d'alimentation (10 ; 110) destinées à être connectées en parallèle à au moins une source (3 ; 103) du produit liquide (2 ; 102), chaque conduite d'alimentation (10; 110) étant en communication de fluide avec au moins un organe respectif (11 ; 111), l'organe (11 ; 111) étant de préférence raccordé dans la région amont d'une conduite d'alimentation respective (10 ; 110).

11. Dispositif selon l'une des revendications 9 à 10, dans lequel au moins deux conduites d'alimentation sont raccordées à un même organe.

12. Dispositif (1 ; 101 ; 201 ; 301) selon l'une des revendications précédentes, dans lequel l'un au moins de l'ensemble des capteurs (9 ; 109 ; 209 ; 309) et de l'ensemble des organes (11 ; 111 ; 211 ; 311) forme un réseau multiplexé et relié par un bus (12.1, 12.2 ; 112.1, 112.2 ; 212.1, 212.2 ; 312.1, 312.2).

13. Dispositif selon l'une quelconque des revendications précédentes, **caractérisé en ce que** chaque capteur et chaque organe sont intégrés dans un seul et même composant, l'ensemble des composants étant reliés entre eux par un même câble formant réseau multiplexé et assurant l'alimentation électrique.

14. Dispositif selon la revendication 13, **caractérisé en ce que** ledit organe incorpore en outre des moyens pour couper l'arrivée de fluide dans la canalisation associée.

15. Procédé, pour distribuer un produit liquide (2 ; 102 ; 202 ; 302) à projeter sur une surface (4 ; 104 ; 204 ; 304) telle qu'un terrain agricole, le dispositif (1 ; 101 ; 201 ; 301) comprenant une rampe (5 ; 105 ; 205 ; 305) pour pulvériser le produit liquide (2 ; 102 ; 202 ; 302), la rampe (5 ; 105 ; 205 ; 305) comportant plusieurs canalisations (6 ; 106 ; 206 ; 306) consécutives, chaque canalisation (6 ; 106 ; 206 ; 306) formant un tronçon longitudinal de la rampe (5 ; 105 ; 205 ; 305) et présentant :
- au moins un orifice d'entrée (7 ; 107 ; 207 ; 307) destiné à être en communication de fluide avec au moins une source (3 ; 103 ; 203 ; 303) du produit liquide (2 ; 102 ; 202 ; 302) ; et
- au moins un orifice de sortie adapté pour être en communication de fluide avec au moins une buse (8 ; 108 ; 208 ; 308),
le procédé étant **caractérisé en ce qu'**il comprend les étapes :
- mesurer une grandeur permettant de déterminer une pression régnant dans une canalisation (6 ; 106 ; 206 ; 306) respective au moyen de plusieurs capteurs (9 ; 109 ; 209 ; 309) liés à des canalisations (6 ; 106 ; 206 ; 306) respectives ;
- évaluer les différences de pressions entre au moins deux canalisations (6 ; 106 ; 206 ; 306) au moyen d'une unité de commande (12 ; 112 ; 212 ; 312) centralisée ou propre à chaque capteur, reliée aux capteurs (9 ; 109 ; 209 ; 309) ; et
- faire varier les pressions régnant dans des canalisations (6 ; 106 ; 206 ; 306) respectives au moyen d'organes (11 ; 111 ; 211 ; 311) qui sont respectivement en communication de fluide avec au moins un desdits orifices d'entrée (7 ; 107 ; 207 ; 307) et qui sont pilotés par l'unité de commande (12 ; 112 ; 212 ; 312) en fonction desdites différences de pressions.

16. Procédé selon la revendication 15, comprenant en outre les étapes :
- vérifier si une pression au niveau d'une canalisation (6 ; 106 ; 206 ; 306) est supérieure à un seuil prédéterminé, de préférence à 0,5 bar ;
- si ladite pression est supérieure au seuil prédéterminé, piloter normalement l'organe (11 ; 111 ; 211 ; 311, 311.1, 311.2) correspondant à ladite canalisation (6 ; 106 ; 206 ; 306) ; et
- si ladite pression est inférieure au seuil prédéterminé, maintenir l'organe (11 ; 111 ; 211 ; 311, 311.1, 311.2) correspondant à ladite canalisation (6 ; 106 ; 206 ; 306) dans son état antérieur et, de préférence, avec une section de passage maximale.

17. Procédé selon l'une des revendications 15 à 16, comprenant en outre les étapes :
- mettre en oeuvre un dispositif selon la revendication 3 ;
- associer le dispositif à une unité de régulation, de pression ou de débit, conçue pour moduler le débit total du produit liquide projeté en fonction de la vitesse d'avance du dispositif sur la surface ;
- calculer, régulièrement et au moyen de l'unité de commande, l'écart entre, d'une part, une valeur moyenne de la pression mesurée par les capteurs et, d'autre part, la pression induite par ladite unité de régulation ; et
- piloter chaque organe de façon à maintenir ledit écart sous une valeur prédéterminée.

18. Procédé selon l'une des revendications 15 à 17, dans lequel on pilote chaque organe (311, 311.1, 311.2) avec une vitesse d'ouverture supérieure à la vitesse de fermeture.

19. Procédé selon l'une des revendications 15 à 18, comprenant en outre l'étape :
- si la grandeur mesurée par un capteur établit qu'une pression régnant dans une canalisation-cible diffère anormalement et simultanément des pressions régnant dans deux canalisations adjacentes, générer, au moyen de l'unité de commande, un signal identifiant la canalisation-cible de façon à informer un opérateur qu'un colmatage a pu survenir dans ou près de la canalisation-cible, par exemple au niveau d'un filtre et/ou d'une buse.

## Patentansprüche

1. Vorrichtung (1; 101; 201; 301) zur Verteilung eines flüssigen Produkts (2; 102; 202; 302) zum Verspritzen auf einer Fläche (4; 104; 204; 304) wie z.B. einer landwirtschaftlichen Fläche, wobei die Vorrichtung (1; 101; 201; 301) eine Rampe (5; 105; 205; 305) umfasst, um das flüssige Produkt (2; 102; 205; 305) zu versprühen, wobei die Rampe (5; 105; 205; 305) mehrere aufeinander folgende Röhren (6; 106; 206; 306) umfasst, wobei jede Röhre (6; 106; 206; 306) einen länglichen Abschnitt der Rampe (5; 105; 205; 305) bildet und Folgendes darstellt:
- mindestens eine Eingangsöffnung (7; 107; 207; 307), die ausgelegt ist, um mit mindestens einer Quelle (3; 103; 203; 303) des flüssigen Produkts (2; 102; 202; 302) in fluidischer Verbindung zu stehen; und
- mindestens eine Ausgangsöffnung, die ausgelegt ist, um mit mindestens einer Düse (8; 108; 208; 308) in fluidischer Verbindung zu stehen,
wobei die Vorrichtung (1; 101; 201) **dadurch gekennzeichnet ist, dass** sie außerdem Folgendes umfasst:
- Sensoren (9; 109; 209; 309), die mit entsprechenden Röhren (6; 106; 206; 306) verbunden sind, wobei jeder Sensor (9; 109; 209; 309) ausgelegt ist, um eine Größe zu messen, die ermöglicht, einen Druckunterschied zwischen zwei entsprechenden Röhren zu bestimmen, oder eine Größe, die ermöglicht, einen Druck zu bestimmen, der in einer entsprechenden Röhre (6; 106; 206; 306) herrscht;
- mehrere Organe (11; 111; 211; 311, 311.1, 311.2), die ausgelegt sind, um die Drücke variieren zu lassen, die in den entsprechenden Röhren (6; 106; 206; 306) herrschen, wobei jedes Organ (11; 111; 211; 311, 311.1, 311.2) in fluidischer Verbindung mit mindestens einer der Eingangsöffnungen (7; 107; 207; 307) steht; und
- mindestens eine Steuereinheit (12; 112; 212; 312), die mit den Sensoren (9; 109; 209; 309) derart verbunden ist, dass sie die Druckunterschiede zwischen mindestens zwei Röhren (6; 106; 206; 306) bewertet, wobei die Steuereinheit (12; 112; 212; 312) mit den Organen (11; 111; 211; 311, 311.1, 311.2) derart verbunden ist, dass sie diese steuert, um die Druckunterschiede zu reduzieren oder die Drücke auszugleichen.

2. Vorrichtung (1; 101; 201; 301) nach Anspruch 1, wobei die Steuereinheit (12; 112; 212; 312) ausgelegt ist, um die Organe (11; 111; 211; 311) derart zu steuern, dass die Druckunterschiede auf weniger als 10 % und vorzugsweise auf weniger als 5 % begrenzt werden.

3. Vorrichtung (1; 101; 201; 301) nach einem der vorhergehenden Ansprüche, wobei die Sensoren (9; 109; 209; 309) Drucksensoren umfassen, die vorzugsweise auf entsprechenden Röhren (6; 106; 206; 306) aufmontiert sind.

4. Vorrichtung (1; 101; 201; 301) nach einem der vorhergehenden Ansprüche, wobei die Sensoren (9; 109; 209; 309) mindestens einen Neigungsmesser umfassen.

5. Vorrichtung (1; 101; 201; 301) nach einem der vorhergehenden Ansprüche, wobei die Organe (11; 111; 211; 311) Organe zur Einschränkung des Durchsatzes des flüssigen Produkts (2; 102; 202; 302) umfassen, wie z.B. Nadelregler, Kegelventile, Glasventile oder proportionale Elektroventile oder Rohrklemmer.

6. Vorrichtung (1) nach Anspruch 5, wobei mindestens ein Organ (11) zur Beschränkung des Durchsatzes zwei Scheiben (11.2, 11.3) umfasst, die auf koaxiale Weise nebeneinander gestellt sind, wobei jede Scheibe(11.2, 11.3) mit einer Öffnung (11.4, 11.5) durchbohrt ist, die dissymetrisch mit Bezug auf die Achse der Scheiben (11.2, 11.3) ist, wobei die Scheiben (11.2, 11.3) um ihre gemeinsame Achse (11.3) unter der Einwirkung eines Antriebsorgans (11.7), z.B. eines elektrischen Motors, in Rotation beweglich sind.

7. Vorrichtung (1; 101; 201; 301) nach einem der vorhergehenden Ansprüche, wobei jede Röhre (6; 106; 206; 306) mit einem Sensor (9; 109; 209; 309) verbunden ist, und jedes Eingangsorgan (7; 107; 207; 307) in fluidischer Verbindung mit einem Organ (11; 111; 211; 311) steht.

8. Vorrichtung nach Anspruch 7, **dadurch gekennzeichnet, dass** die Rampe (205; 305) außerdem Verbindungsleitungen (218; 318) umfasst, die derart angeordnet sind, dass zwei aufeinander folgende Röhren (206; 306) durch eine entsprechende Verbindungsleitung (218; 318) verbunden sind, und derart, dass Verbindungsleitungen (218; 318) mindestens einen Teil der Rampe bilden, ausgestattet mit mehreren Röhren (206, 306), die in Reihe verbunden sind, wobei die Rampe (205; 305) einen einzigen oder mehrere der Rampenteile umfasst, die parallel montiert sind, und dadurch, dass mindestens ein Organ (211; 311) zwischen Röhren (206; 306) angeordnet ist, die in Reihe verbunden sind.

9. Vorrichtung nach Anspruch 8, **dadurch gekennzeichnet, dass** sie außerdem zwei Versorgungsleitungen (210; 310) umfasst, die jeweils mit den zwei Röhren (206; 306) verbunden sind, die an jedem Ende der Rampe (205, 305) oder eines Teils der Rampe angeordnet sind, dadurch, dass die Rampe (205; 305) oder jeder Teil der Rampe außerdem zwei Organe (311.1, 311.2) oder zwei Trennventile (213) umfasst, wobei jedes Organ (311.1, 311.2) oder jedes Trennventil (213) angeordnet ist, um selektiv ein Fliessen von flüssigem Produkt (202; 302) in einer entsprechenden Versorgungsleitung (210; 310) zu ermöglichen, oder um einen vorbestimmten Ladungsverlust zu erzeugen.

10. Vorrichtung (1; 101) nach einem der Ansprüche 1 bis 7, außerdem umfassend mehrere Versorgungsleitungen (10; 110) die ausgelegt sind, um parallel mit mindestens einer Quelle (3; 103) des flüssigen Produkts (2; 102) verbunden zu sein, wobei jede Versorgungsleitung (10; 110) in fluidischer Verbindung mit mindestens einem entsprechenden Organ (11; 111) steht, wobei das Organ (11; 111) vorzugsweise im vorgelagerten Bereich einer entsprechenden Versorgungsleitung (10; 110) verbunden ist.

11. Vorrichtung nach einem der Ansprüche 9 bis 10, wobei mindestens zwei Versorgungsleitungen mit einem gleichen Organ verbunden sind.

12. Vorrichtung (1; 101; 201; 301) nach einem der vorhergehenden Ansprüche, wobei mindestens eine der Einheit der Sensoren (9; 109; 209; 309) und der Einheit der Organe (11; 111; 211; 311) und Multiplex- und durch einen Bus (12.1, 12.2; 112.1, 112.2; 212.1, 212.2; 312.1, 312.2) verbundenes Netz bildet.

13. Verfahren nach einem der vorhergehenden Ansprüche, **dadurch gekennzeichnet, dass** jeder Sensor und jedes Organ in einer einzigen und gleichen Komponente integriert sind, wobei die Einheit der Komponenten untereinander durch ein gleiches Kabel verbunden ist, das ein Multiplex-Netz bildet und die elektrische Versorgung sicherstellt.

14. Vorrichtung nach Anspruch 13, **dadurch gekennzeichnet, dass** das Organ außerdem Mittel einschließt, um die Ankunft von Fluid in der assoziierten Röhre zu unterbrechen.

15. Vorrichtung zur Verteilung eines flüssigen Produkts (2; 102; 202; 302) zum Verspritzen auf einer Fläche (4; 104; 204; 304) wie z.B. einer landwirtschaftlichen Fläche, wobei die Vorrichtung (1; 101; 201; 301) eine Rampe (5; 105; 205; 305) umfasst, um das flüssige Produkt (2; 102; 202; 302) zu versprühen, wobei die Rampe (5; 105; 205; 305) mehrere aufeinander folgende Röhren (6; 106; 206; 306) umfasst, wobei jede Röhre (6; 106; 206; 306) einen länglichen Abschnitt der Rampe (5; 105; 205; 305) bildet und Folgendes aufweist:
- mindestens eine Eingangsöffnung (7; 107; 207; 307), die ausgelegt ist, um mit mindestens einer Quelle (3; 103; 203; 303) des flüssigen Produkts (2; 102; 202; 302) in fluidischer Verbindung zu stehen; und
- mindestens eine Ausgangsöffnung, die ausgelegt ist, um mit mindestens einer Düse (8; 108; 208; 308) in fluidischer Verbindung zu stehen,
wobei das Verfahren **dadurch gekennzeichnet ist, dass** es die folgenden Schritte umfasst:
- Messen einer Größe, die ermöglicht, einen Druck, der in einer entsprechenden Röhre (6; 106; 206; 306) herrscht, mit Hilfe von mehreren Sensoren (9; 109; 209; 309) zu bestimmen, die mit entsprechenden Röhren (6; 106; 206; 306) verbunden sind,
- Bewerten der Druckunterschiede zwischen mindestens zwei Röhren (6; 106; 206; 306) mit Hilfe einer zentralisierten oder jedem Sensor eigenen Steuereinheit (12; 112; 212; 312), die mit den Sensoren (9; 109; 209; 309) verbunden ist; und
- Variieren der Drücke, die in den entsprechenden Röhren (6; 106; 206; 306) herrschen, mit Hilfe von Organen (11; 111; 211; 311), die jeweils in fluidischer Verbindung mit mindestens einem der Eingangsöffnungen (7; 107; 207; 307) stehen, und die von der Steuereinheit (12; 112; 212; 312), je nach den Druckunterschieden gesteuert werden.

16. Verfahren nach Anspruch 15, außerdem umfassend die folgenden Schritte:
- Überprüfen, ob ein Druck auf der Ebene einer Röhre (6; 106; 206; 306) höher als eine vorbestimmte Schwelle ist, vorzugsweise 0,5 Bar;
- wenn der Druck höher als die vorbestimmte Schwelle ist, normales Steuern des Organs (11; 111; 211; 311, 311.1, 311.2) das der Röhre (6; 106; 206; 306) entspricht; und
- wenn der Druck niedriger als die vorbestimmte Schwelle ist, Beibehalten des Organs (11; 111; 211; 311, 311.1, 311.2), das der Röhre (6; 106; 206; 306) entspricht, in seinem vorherigen Zustand, und vorzugsweise mit einem maximalen Durchgangsabschnitt.

17. Verfahren nach einem der Ansprüche 15 bis 16, außerdem umfassend die folgenden Schritte:
- Durchführen einer Vorrichtung nach Anspruch 3,
- Assoziieren der Vorrichtung mit einer Einheit zur Regulierung des Drucks oder des Durchsatzes, die ausgerichtet ist, um den Gesamtdurchsatz des flüssigen Produkts zu verändern, die je nach der Vorschubgeschwindigkeit der Vorrichtung auf der Fläche versprüht wird;
- regelmäßiges und mit Hilfe der Steuereinheit durchgeführtes Berechnen des Abstands zwischen einerseits einem mittleren Wert des Drucks, gemessen durch die Sensoren, und, andererseits, dem Druck, der von der Regulierungseinheit induzierten wird; und
- Steuern jedes Organs, um den Abstand unter einem vorbestimmten Wert zu halten.

18. Verfahren nach einem der Ansprüche 15 bis 17, wobei jedes Organ (311, 311.1, 311.2) mit einer Öffnungsgeschwindigkeit gesteuert wird, die höher als die Verschlussgeschwindigkeit ist.

19. Verfahren nach einem der Ansprüche 15 bis 18, außerdem umfassend den folgenden Schritt:
- wenn die Größe, gemessen von einem Sensor, festlegt, dass ein Druck, der in einer Zielröhre herrscht, anormal und gleichzeitig von den Drücken abweicht, die in zwei benachbarten Röhren herrschen, Erzeugen, mit Hilfe der Steuereinheit, eines Signals, das die Zielröhre identifiziert, um einen Benutzer zu informieren, dass eine Verstopfung in oder in der Nähe der Zielröhre auftreten konnte, z.B. auf der Ebene eines Filters und/oder einer Düse.

## Claims

1. A device (1; 101; 201; 301) for dispensing a liquid product (2; 102; 202; 302) to be sprayed over a surface (4; 104; 204; 304) such as an agricultural field, the device (1; 101; 201; 301) comprising a bar (5; 105; 205; 305) for spraying the liquid product (2; 102; 205; 305), the bar (5; 105; 205; 305) including several consecutive ducts (6; 106; 206; 306), each duct (6; 106; 206; 306) forming a longitudinal segment of the bar (5; 105; 205; 305) and having:
- at least one inlet port (7; 107; 207; 307) designed to be in fluid communication with at least one liquid product (2; 102; 202; 302) source (3; 103; 203; 303); and
- at least one outlet port adapted to be in fluid communication with at least one nozzle (8; 108; 208; 308),
the device (1; 101; 201) being **characterized in that** it further comprises:
- sensors (9; 109; 209; 309) linked to respective ducts (6; 106; 206; 306), each sensor (9; 109; 209; 309) being suitable for measuring a physical property making it possible to determine a pressure difference between two respective ducts or a physical property making it possible to determine a pressure inside a respective duct (6; 106; 206; 306);
- several members (11; 111; 211; 311, 311.1, 311.2) designed to vary the pressures inside respective ducts (6; 106; 206; 306), each member (11; 111; 211; 311, 311.1, 311.2) being in fluid communication with at least one of said inlet ports (7; 107; 207; 307); and
- at least one control unit (12; 112; 212; 312) interconnected with the sensors (9; 109; 209; 309) so as to estimate the pressure differences between at least two ducts (6; 106; 206; 306), said control unit (12; 112; 212; 312) being interconnected with the members (11; 111; 211; 311, 311.1, 311.2) so as to drive them to reduce said pressure differences or equalize said pressures.

2. The device (1; 101; 201; 301) according to claim 1, wherein the control unit (12; 112; 212; 312) is designed to drive the members (11; 111; 211; 311) so as to limit said pressure differences to less than 10%, and preferably less than 5%.

3. The device (1; 101; 201; 301) according to any preceding claim, wherein the sensors (9; 109; 209; 309) comprise pressure sensors, preferably attached on respective ducts (6; 106; 206; 306).

4. The device (1; 101; 201; 301) according to any preceding claim, wherein the sensors (9; 109; 209; 309) comprise at least one inclinometer.

5. The device (1; 101; 201; 301) according to any preceding claim, wherein the members (11; 111; 211; 311) comprise members for restricting the flow of the liquid product (2; 102; 202; 302), such as needle regulators, sliding gate valves, ice sluices or proportional solenoid valves, or hose clamps.

6. The device (1) according to claim 5, wherein at least one flow restricting member (11) includes two discs (11.2, 11.3) coaxially juxtaposed, each disc (11.2, 11.3) being pierced with an orifice (11.4, 11.5) that is asymmetrical relative to the axis of the discs (11.2, 11.3), the discs (11.2, 11.3) being rotatable around their shared axis (11.3) under the action of a driving member (11.7), for example an electric motor.

7. The device (1; 101; 201; 301) according to any preceding claim, wherein each duct (6; 106; 206; 306) is linked to a sensor (9; 109; 209; 309) and each inlet port (7; 107; 207; 307) is in fluid communication with a member (11; 111; 211; 311).

8. The device according to claim 7, **characterized in that** the bar (205, 305) further includes connecting conduits (218; 318) arranged such that two consecutive ducts (206, 306) are connected by a respective connecting conduit (218; 318) and such that the connecting conduits (218; 318) form at least one bar portion equipped with several ducts (206; 306) connected in series, the bar (205; 305) including one or more of said bar portions arranged in parallel, and **in that** at least one member (211; 311) is arranged between the ducts (206; 306) connected in series.

9. The device according to claim 8, **characterized in that** it further comprises two supply conduits (210; 310) respectively coupled to the two ducts (206; 306) arranged at each end of the bar (205; 305) or of a bar portion, **in that** the bar (205; 305) or each bar portion also includes two members (311.1, 311.2) or two cutoff valves (213), each member (311.1, 311.2) or cutoff valve (213) being arranged to selectively allow a flow of liquid product (202; 302) in a respective supply conduit (210; 310) or to create a predetermined pressure drop.

10. The device (1; 101) according to one of claims 1 to 7, further comprising several supply conduits (10; 110) designed to be connected in parallel to at least one liquid product (2; 102) source (3; 103), each supply conduit (10; 110) being in fluid communication with at least one respective member (11; 111), the member (11; 111) preferably being coupled in the upstream region of a respective supply conduit (10; 110).

11. The device according to one of claims 9 to 10, wherein at least two supply conduits are coupled to a same member.

12. The device (1; 101; 201; 301) according to any preceding claims, wherein at least one among the set of sensors (9; 109; 209; 309) and the set of members (11; 111; 211; 311) forms a multiplexed network interconnected by a bus (12.1, 12.2; 112.1, 112.2; 212.1, 212.2; 312.1, 312.2).

13. The device according to any preceding claim, **characterized in that** each sensor and each member are incorporated into a single and same component, the set of components being interconnected between them by a same cable forming a multiplexed network and providing electric supply.

14. The device according to claim 13, **characterized in that** said member further incorporates means for cutting the arrival of fluid into the associated duct.

15. A method for dispensing a liquid product (2; 102; 202; 302) to be sprayed over a surface (4; 104; 204; 304) such as an agricultural field, the device (1; 101; 201; 301) comprising a bar (5; 105; 205; 305) for spraying the liquid product (2; 102; 202; 302), the bar (5; 105; 205; 305) having several consecutive ducts (6; 106; 206; 306), each duct (6; 106; 206; 306) forming a longitudinal segment of the bar (5; 105; 205; 305) and having:
- at least one inlet port (7; 107; 207; 307) designed to be in fluid communication with at least one liquid product (2; 102; 202; 302) source (3; 103; 203; 303); and
- at least one outlet port suitable for being in fluid communication with at least one nozzle (8; 108; 208; 308),
the method being **characterized in that** it comprises the steps of:
- measuring a physical property making it possible to determine a pressure inside a respective duct (6; 106; 206; 306) by means of several sensors (9; 109; 209; 309) linked to respective ducts (6; 106; 206; 306);
- estimating the pressure differences between at least two ducts (6; 106; 206; 306) by means of a control unit (12; 112; 212; 312), which is centralized or specific to each sensor, and which is interconnected with the sensors (9; 109; 209; 309); and
- varying the pressures inside the respective ducts (6; 106; 206; 306) by means of members (11; 111; 211; 311) that are respectively in fluid communication with at least one of said inlet ports (7; 107; 207; 307) and which are driven by the control unit (12; 112; 212; 312) as a function of said pressure differences.

16. The method according to claim 15, further comprising the steps of:
- checking whether a pressure at a duct (6; 106; 206; 306) is above a predetermined threshold, preferably 0.5 bar;
- if said pressure is above the predetermined threshold, driving the member (11; 111; 211; 311, 311.1, 311.2) corresponding to said duct (6; 106; 206; 306) normally; and
- if said pressure is below the predetermined threshold, keeping the member (11; 111; 211; 311, 311.1, 311.2) corresponding to said duct (6; 106; 206; 306) in its prior state and, preferably, with a maximum flow section.

17. The method according to one of claims 15 to 16, further comprising the steps of:
- implementing a device according to claim 3,
- associating the device with a pressure or flow regulating unit, designed to modulate the total flow rate of the sprayed liquid product as a function of the forward speed of the device on the surface;
- calculating, regularly and by means of the control unit, the gap between an average value of the pressure measured by the sensors and the pressure caused by said regulating unit; and
- driving each member so as to keep said gap below a predetermined value.

18. The method according to one of claims 15 to 17, wherein each member (311, 311.1, 311.2) is driven with an opening speed greater than the closure speed.

19. The method according to one of claims 15 to 18, further comprising the step of:
- if the physical property measured by a sensor establishes that a pressure inside a target duct differs abnormally and simultaneously from the pressures inside two adjacent ducts, generating, by means of the control unit, a signal identifying the target duct so as to inform an operator that a clog may have occurred in or near the target duct, for example at a filter and/or a nozzle.
